(19) Europäisches Patentamt / European Patent Office / Office européen des brevets

(11) **EP 4 198 942 A1**

(12) **EUROPÄISCHE PATENTANMELDUNG**

(43) Veröffentlichungstag:
**21.06.2023 Patentblatt 2023/25**

(21) Anmeldenummer: **22207982.4**

(22) Anmeldetag: **17.11.2022**

(51) Internationale Patentklassifikation (IPC):
*G08G 1/0967* (2006.01)    *B60W 30/09* (2012.01)
*B60W 30/095* (2012.01)    *B60W 60/00* (2020.01)
*G08G 1/16* (2006.01)

(52) Gemeinsame Patentklassifikation (CPC):
**G08G 1/096791; B60W 30/0956; B60W 60/0027;**
**G08G 1/162; G08G 1/166; G08G 1/167**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **14.12.2021 DE 102021214341**

(71) Anmelder: **VOLKSWAGEN AG**
**38440 Wolfsburg (DE)**

(72) Erfinder:
• **Weng, Michael**
 **10559 Berlin (DE)**
• **Balaghiasefi, Reza**
 **38446 Wolfsburg (DE)**
• **Gläser, Stefan**
 **38104 Braunschweig (DE)**
• **Engel, Monique**
 **29379 Knesebeck (DE)**
• **Leutner, Sebastian**
 **38102 Braunschweig (DE)**
• **Schid, Matthias**
 **38114 Braunschweig (DE)**

(54) **VERFAHREN ZUR KOOPERATIVEN MANÖVERPLANUNG FÜR MINDESTENS ZWEI FAHRZEUGE UND ASSISTENZVORRICHTUNG**

(57) Die Erfindung betrifft eine Assistenzvorrichtung (1) und ein Verfahren zur kooperativen Manöverplanung für mindestens zwei Fahrzeuge (50,55), wobei in jedem Fahrzeug (50,55) für jeden Planungszyklus ($t_x$) in Abhängigkeit von einer Kostenfunktion eine Plantrajektorie (20,30) und eine Wunschtrajektorie (21,31) ausgewählt werden und jeweils an andere Fahrzeuge (55) übermittelt werden; wobei hierzu eine mit Plantrajektorien (30) und Wunschtrajektorien (31) anderer Fahrzeuge (55) kollisionsfreie kostengünstigste erste Trajektorie (6-1) erzeugt wird, und i) wobei hierzu eine kostengünstigste zweite Trajektorie (6-2), welche Plantrajektorien (30) und Wunschtrajektorien (31) anderer Fahrzeuge (55) ignoriert, erzeugt und als Wunschtrajektorie (21) nur übermittelt wird, wenn eine Kostendifferenz zwischen der ersten (6-1) und der zweiten Trajektorie (6-2) größer ist als ein Minimalkostenreduktionswert (MinCR), und ii) wobei hierzu zusätzlich oder alternativ zu i) eine kostengünstigste dritte Trajektorie (6-3) erzeugt wird, die mit Plantrajektorien (30) anderer Fahrzeuge (55) kollisionsfrei ist, jedoch deren Wunschtrajektorien (31) ignoriert, wobei eine Wunschtrajektorie (31) eines anderen Fahrzeugs (55) akzeptiert wird, wenn eine Kostendifferenz zwischen der ersten Trajektorie (6-1) und der dritten Trajektorie (6-3) kleiner ist als ein Maximalkostenanstiegswert (MaxCl).

Fig. 1

**Beschreibung**

Die Erfindung betrifft ein Verfahren zur kooperativen Manöverplanung für mindestens zwei Fahrzeuge und eine Assistenzvorrichtung.

Bei kostenbasierten Trajektorienplanern wird üblicherweise im Rahmen eines Planungszyklus umfeldabhängig eine Vielzahl an fahrbaren Trajektorien erzeugt (auch als "Trajektorien-Raum" bezeichnet). Anschließend werden die erzeugten Trajektorien anhand einer Kostenfunktion bewertet. Die kostengünstigste kollisionsfreie Trajektorie wird dann für die Planung ausgewählt und als Plantrajektorie verwendet. Ein solcher Planungszyklus wird in einem kurzen zeitlichen Abstand wiederholt durchlaufen, um kontinuierlich auf Veränderungen der Verkehrssituation im Umfeld zu reagieren.

Aus der DE 10 2014 211 507 A1 ist ein Verfahren für ein Fahrerassistenzsystem eines Fahrzeugs bekannt. Dabei wird eine Umgebungsinformation einer Umgebung des Fahrzeugs erfasst und eine Gruppe von aktuell möglichen Eigenfahrmanövern auf der Grundlage der Umgebungsinformation bestimmt. Ferner wird eine Gruppe von aktuell möglichen Fremdfahrmanövern von einem Fremdfahrzeug in der Umgebung des Fahrzeugs empfangen und eine Gruppe von aktuell möglichen Fahrmanöverkombinationen bestimmt, welche Kombinationen aus aktuell möglichen Eigenfahrmanövern und aktuell möglichen Fremdfahrmanövern umfasst. Für jede Kombination der Gruppe von aktuell möglichen Fahrmanöverkombinationen wird ein entsprechender Gesamtkostenwert bestimmt und in Abhängigkeit von den Gesamtkostenwerten eine Kombination aus der Gruppe von aktuell möglichen Fahrmanöverkombinationen ausgewählt. Das Eigenfahrmanöver der ausgewählten Kombination wird ausgeführt.

Der Erfindung liegt die Aufgabe zu Grunde, ein Verfahren zur kooperativen Manöverplanung für mindestens zwei Fahrzeuge und eine entsprechende Assistenzvorrichtung zu verbessern.

Die Aufgabe wird erfindungsgemäß durch ein Verfahren mit den Merkmalen des Patentanspruchs 1 und eine Assistenzvorrichtung mit den Merkmalen des Patentanspruchs 9 gelöst. Vorteilhafte Ausgestaltungen der Erfindung ergeben sich aus den Unteransprüchen.

Insbesondere wird ein Verfahren zur kooperativen Manöverplanung für mindestens zwei Fahrzeuge zur Verfügung gestellt, wobei in jedem Fahrzeug mittels eines Trajektorienplaners für jeden Planungszyklus aus einer Vielzahl von umfeldabhängig erzeugten fahrbaren Trajektorien in Abhängigkeit von einer Kostenfunktion eine Plantrajektorie und eine Wunschtrajektorie ausgewählt werden und jeweils an andere Fahrzeuge im Umfeld übermittelt werden; wobei hierzu eine mit Plantrajektorien und Wunschtrajektorien anderer Fahrzeuge kollisionsfreie kostengünstigste erste Trajektorie erzeugt wird, und

i) wobei hierzu eine kostengünstigste zweite Trajektorie, welche Plantrajektorien und Wunschtrajektorien anderer Fahrzeuge ignoriert, erzeugt wird, wobei die zweite Trajektorie als Wunschtrajektorie an andere Fahrzeuge nur übermittelt wird, wenn eine Kostendifferenz zwischen der ersten Trajektorie und der zweiten Trajektorie des jeweiligen Fahrzeugs größer ist als ein vorgegebener Minimalkostenreduktionswert, und

ii) wobei hierzu zusätzlich oder alternativ zu i) eine kostengünstigste dritte Trajektorie erzeugt wird, die mit Plantrajektorien anderer Fahrzeuge kollisionsfrei ist, jedoch Wunschtrajektorien anderer Fahrzeuge ignoriert, wobei eine Wunschtrajektorie eines anderen Fahrzeugs von einem Fahrzeug bei der Trajektorienplanung akzeptiert wird, wenn eine Kostendifferenz zwischen der ersten Trajektorie und der dritten Trajektorie kleiner ist als ein vorgegebener Maximalkostenanstiegswert, wobei das Fahrzeug im Falle einer akzeptierten Wunschtrajektorie eines anderen Fahrzeugs die erste Trajektorie als neue Plantrajektorie verwendet und wobei das Fahrzeug im Falle einer abgelehnten Wunschtrajektorie des anderen Fahrzeugs die dritte Trajektorie als neue Plantrajektorie verwendet.

Ferner wird insbesondere eine Assistenzvorrichtung für ein Fahrzeug geschaffen, umfassend eine Datenverarbeitungseinrichtung, wobei die Datenverarbeitungseinrichtung dazu eingerichtet ist, in dem Fahrzeug mittels eines Trajektorienplaners für jeden Planungszyklus aus einer Vielzahl von umfeldabhängig erzeugten fahrbaren Trajektorien in Abhängigkeit von einer Kostenfunktion eine Plantrajektorie und eine Wunschtrajektorie auszuwählen und jeweils an andere Fahrzeuge im Umfeld zu übermitteln; und hierzu eine mit Plantrajektorien und Wunschtrajektorien anderer Fahrzeuge kollisionsfreie kostengünstigste erste Trajektorie zu erzeugen, und

i) hierzu eine kostengünstigste zweite Trajektorie, welche Plantrajektorien und Wunschtrajektorien anderer Fahrzeuge ignoriert, zu erzeugen und die zweite Trajektorie als Wunschtrajektorie an andere Fahrzeuge nur zu übermitteln, wenn eine Kostendifferenz zwischen der ersten Trajektorie und der zweiten Trajektorie des jeweiligen Fahrzeugs größer ist als ein vorgegebener Minimalkostenreduktionswert, und

ii) hierzu zusätzlich oder alternativ zu i) eine kostengünstigste dritte Trajektorie zu erzeugen, die mit Plantrajektorien anderer Fahrzeuge kollisionsfrei ist, jedoch Wunschtrajektorien anderer Fahrzeuge ignoriert, und eine Wunschtrajektorie eines anderen Fahrzeugs bei der Trajektorienplanung zu akzeptieren, wenn eine Kostendifferenz zwischen der ersten Trajektorie und der dritten Trajektorie kleiner ist als ein vorgegebener Maximalkostenanstiegswert, und im Falle einer akzeptierten Wunschtrajektorie eines anderen Fahrzeugs die erste Trajektorie als neue Plantrajektorie zu verwenden und im Falle einer abgelehnten Wunschtrajektorie eines anderen Fahrzeugs die dritte Trajektorie als neue Plantrajektorie zu verwenden.

Das Verfahren und die Assistenzvorrichtung ermöglichen es, eine Datenmenge, die zur Manöverkoordination übertragen werden muss, zu reduzieren. Ferner ermöglichen das Verfahren und die Assistenzvorrichtung eine indirekte Manöverkoordination, bei der eine Wunschtrajektorie nicht direkt, sondern auf indirekte Weise, das heißt, über das eigene Verhalten eines Fahrzeugs akzeptiert oder abgelehnt wird. Dies reduziert zum einen ebenfalls eine Datenmenge, da keine weiteren Nachrichten für eine Akzeptanz oder eine Ablehnung übermittelt werden müssen. Zum anderen kann eine Gesamtkoordination bzw. ein Gesamtsystem aus mehreren Fahrzeugen in Bezug auf die Manöverplanung hierdurch stabiler ablaufen.

Dies wird zum einen erreicht, indem eine mögliche Wunschtrajektorie (als zweite Trajektorie bezeichnet) vor einem Übermitteln an andere Fahrzeuge auf das Vorliegen von einer Bedingung überprüft wird: Eine Kostenreduktion bei Realisierung einer solchen Wunschtrajektorie (d.h. der zweiten Trajektorie) gegenüber einer Realisierung einer vorläufigen Plantrajektorie (als erste Trajektorie bezeichnet) muss größer sein als ein vorgegebener Minimalkostenreduktionswert. Nur wenn diese Bedingung erfüllt ist, wird die zweite Trajektorie als Wunschtrajektorie an andere Fahrzeuge übermittelt. Anderenfalls wird keine Wunschtrajektorie übermittelt, sondern nur die Plantrajektorie.

Zum anderen wird alternativ oder zusätzlich hierzu eine von einem anderen Fahrzeug eingehende Wunschtrajektorie auf das Vorliegen einer weiteren Bedingung überprüft: Ein Kostenanstieg durch Berücksichtigung dieser Wunschtrajektorie bei der Trajektorienplanung muss kleiner sein als ein vorgegebener Maximalkostenanstiegswert. Hierzu wird eine dritte Trajektorie erzeugt, die mit Plantrajektorien anderer Fahrzeuge kollisionsfrei ist, jedoch Wunschtrajektorien anderer Fahrzeuge ignoriert. Es wird dann eine Kostendifferenz zwischen den Kosten einer Realisierung der ersten Trajektorie (die die eingehende Wunschtrajektorie des anderen Fahrzeugs berücksichtigt) und den Kosten einer Realisierung der dritten Trajektorie bestimmt und mit dem vorgegebenen Maximalkostenanstiegswert verglichen. In Abhängigkeit von einem Vergleichsergebnis wird entweder die erste Trajektorie oder die dritte Trajektorie als neue Plantrajektorie, das heißt, insbesondere als Plantrajektorie im nächsten Planungszyklus, verwendet.

Das Übermitteln der jeweiligen Plantrajektorien und Wunschtrajektorien an die anderen Fahrzeuge erfolgt insbesondere in Form von Manöver-Koordinationsnachrichten (engl. Maneuver Coordination Message, MCM). Das Übermitteln erfolgt insbesondere mittels einer Car-to-X-Kommunikationseinrichtung oder einer anderen geeigneten Kommunikationseinrichtung des jeweiligen Fahrzeuges.

Teile der Assistenzvorrichtung, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

In einer Ausführungsform ist vorgesehen, dass die zweite Trajektorie und/oder die dritte Trajektorie für einen Planungszyklus nur gespeichert werden, wenn diese sich von der ersten Trajektorie unterscheiden. Hierdurch kann ein Speicherbedarf reduziert werden. Insbesondere in Verkehrssituationen, in denen sich keine anderen Fahrzeuge im Umfeld befinden, kann dies der Fall sein.

In einer Ausführungsform ist vorgesehen, dass der Minimalkostenreduktionswert und/oder der Maximalkostenanstiegswert unter Berücksichtigung einer aktuellen Situation festgelegt werden. Hierdurch kann ein Kooperationsverhalten an die jeweils aktuelle Situation angepasst werden. Eine aktuelle Situation kann beispielsweise eine Verkehrssituation und/oder ein Verkehrsszenario (Auffahren auf eine Autobahn, Abbiegen, Spurwechsel usw.) und/oder eine Witterung und/oder eine Verkehrsdichte umfassen. So kann beispielsweise vorgesehen sein, bei Fahrspuren mit großer Verkehrsdichte eine Kooperationsbereitschaft zu senken, da beispielsweise ein Abbremsen eines Fahrzeugs auf einer Fahrspur mit vielen dicht hintereinander fahrenden Folgefahrzeugen zum Hineinlassen eines Fahrzeugs von einer anderen Fahrspur zu einem großen Energieeffizienzverlust führen kann, da die Folgefahrzeuge ebenfalls abbremsen müssten. Der Maximalkostenanstiegswert wird in diesem Beispiel dann verringert. Eine Verkehrssituation und/oder ein Verkehrsszenario können beispielsweise auch einen Straßentyp (Hauptstraße, Nebenstraße, Landstraße, Autobahn usw.) betreffen.

In einer Ausführungsform ist vorgesehen, dass der Minimalkostenreduktionswert und der Maximalkostenanstiegswert abhängig voneinander festgelegt werden. Beispielsweise kann vorgesehen sein, dass der Maximalkostenanstiegswert eines kooperierenden Fahrzeugs unter Berücksichtigung des Minimalkostenreduktionswerts eines anfragenden Fahrzeugs festlegt wird. Hierdurch kann man sicherstellen, dass die Gesamtkosten der in der Kooperation involvierten Fahrzeuge reduziert werden, sodass insgesamt eine Kooperationseffizienz erhöht werden kann. Ferner kann vorgesehen sein, dass bei Verändern eines der Werte der jeweils andere Wert entsprechend geändert wird. Hierdurch wird bei einem Fahrzeug, das beispielsweise häufig Wunschtrajektorien an andere Fahrzeuge übermitteln soll, die Kooperationsbereitschaft in gleicher Weise erhöht werden.

In einer Ausführungsform ist vorgesehen, dass der Minimalkostenreduktionswert und/oder der Maximalkostenanstiegswert von mindestens einer Infrastruktureinrichtung bereitgestellt werden. Hierdurch kann ortsabhängig eine Kooperation zwischen den Fahrzeugen beeinflusst und festgelegt werden. Eine solche Infrastruktureinrichtung kann beispielsweise eine Funkbake oder eine Lichtsignalanlage oder ein entsprechend ausgerüstetes Verkehrsschild etc. sein. Der Minimalkostenreduktionswert und/oder der Maximalkostenanstiegswert werden dann insbesondere per Funksignal an die Fahrzeuge übermittelt und von diesen beim Durchführen der beschriebenen Maßnahmen berücksichtigt.

In einer Ausführungsform ist vorgesehen, dass der Minimalkostenreduktionswert und/oder der Maximalkostenanstiegswert unter Berücksichtigung einer Fahrerpräferenz festgelegt werden. Hierdurch kann ein Fahrer eines Fahrzeugs seine Kooperationsbereitschaft individuell festlegen oder diese zumindest beeinflussen. Der Minimalkostenreduktionswert und/oder der Maximalkostenanstiegswert werden beispielsweise an einer Anzeige- und Bedieneinrichtung des Fahrzeugs abgefragt und/oder können über diese festgelegt werden.

In einer Ausführungsform ist vorgesehen, dass der Minimalkostenreduktionswert und/oder der Maximalkostenanstiegswert unter Berücksichtigung von Fahrzeugeigenschaften und/oder einer Fahrzeugart festgelegt werden. Hierdurch können fahrzeugbedingte Einschränkungen und/oder Fähigkeiten berücksichtigt werden. Eine Fahrzeugeigenschaft kann beispielsweise eine Fähigkeit zur Rekuperation von Bremsenergie umfassen. Entsprechend kann bei vorhandener Fähigkeit zur Rekuperation eine Kooperationsbereitschaft größer sein. Eine Fahrzeugart kann beispielsweise ein Elektrofahrzeug oder ein Verbrennerfahrzeug sein. Ferner kann eine Fahrzeugart auch eine Unterscheidung zwischen Zivilfahrzeug und öffentlichem Fahrzeug (Öffentlicher Personennahverkehr, Einsatzfahrzeuge der Polizei und Feuerwehr usw.) betreffen. Beispielsweise kann eine Kooperation von Zivilfahrzeugen mit anderen Fahrzeugen größer sein, als eine Kooperation von sich im Einsatz befindenden öffentlichen Fahrzeugen anderen Fahrzeugen gegenüber. Der Minimalkostenreduktionswert und/oder der Maximalkostenanstiegswert werden dann entsprechend gewählt.

In einer Ausführungsform ist vorgesehen, dass die Kostendifferenz zwischen der ersten Trajektorie und der zweiten Trajektorie ebenfalls an jeweils andere Fahrzeuge übermittelt wird, wenn die zweite Trajektorie als Wunschtrajektorie übermittelt wird, wobei die übermittelte Kostendifferenz von den anderen Fahrzeugen bei der jeweiligen Trajektorienplanung berücksichtigt wird. Hierdurch kann trotz der Vorteile des Verfahrens bei einer reduzierten Datenübertragung eine gruppenbezogene Manöverplanung erfolgen, bei der Gesamtkosten berücksichtigt und minimiert werden können.

Weitere Merkmale zur Ausgestaltung der Assistenzvorrichtung ergeben sich aus der Beschreibung von Ausgestaltungen des Verfahrens. Die Vorteile der Assistenzvorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:

Fig. 1     eine schematische Darstellung einer Ausführungsform der Assistenzvorrichtung;

Fig. 2a, b     schematische Darstellungen von einer Verkehrssituation in aufeinanderfolgenden Planungszyklen zur Verdeutlichung einer Ausführungsform des Verfahrens;

Fig. 3a, b, c     schematische Darstellungen derselben Verkehrssituation in nachfolgenden Planungszyklen zur Verdeutlichung einer Ausführungsform des Verfahrens;

Fig. 4     ein schematisches Ablaufdiagramm einer Ausführungsform des Verfahrens zur kooperativen Manöverplanung für mindestens zwei Fahrzeuge.

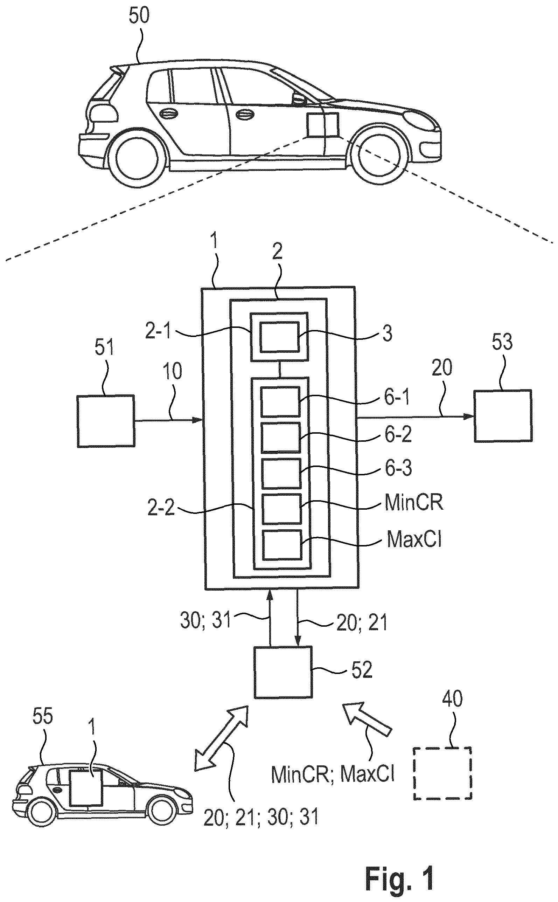

Die Fig. 1 zeigt eine schematische Darstellung einer Ausführungsform der Assistenzvorrichtung 1. Die Assistenzvorrichtung 1 umfasst eine Datenverarbeitungseinrichtung 2. Die Datenverarbeitungseinrichtung 2 umfasst eine Recheneinrichtung 2-1 und einen Speicher 2-2. Die Assistenzvorrichtung 1 ist in einem Fahrzeug 50 angeordnet, insbesondere in einem Kraftfahrzeug. Die Assistenzvorrichtung 1 führt insbesondere das in dieser Offenbarung beschriebene Verfahren aus. Das in dieser Offenbarung beschriebene Verfahren wird nachfolgend anhand der Assistenzvorrichtung 1 näher erläutert.

Der Assistenzvorrichtung 1 werden Umfelddaten 10 mindestens eines Umfeldsensors 51 des Fahrzeugs 50 zugeführt. Die Assistenzvorrichtung 1 ist dazu eingerichtet, eine Trajektorienplanung für das Fahrzeug 50 durchzuführen. Die Datenverarbeitungseinrichtung 2 ist daher dazu eingerichtet, in dem Fahrzeug 50 mittels eines Trajektorienplaners 3 für jeden Planungszyklus aus einer Vielzahl von umfeldabhängig, das heißt, insbesondere unter Berücksichtigung der erfassten Umfelddaten 10, erzeugten fahrbaren Trajektorien in Abhängigkeit von einer Kostenfunktion eine Plantrajektorie 20 und eine Wunschtrajektorie 21 auszuwählen und jeweils an andere Fahrzeuge 55 im Umfeld zu übermitteln. Das Übermitteln erfolgt beispielsweise mittels einer Car-to-X-Schnittstelle 52 des Fahrzeugs 50. Der Trajektorienplaner 3 wird insbesondere in Form von Programmcode bereitgestellt, der auf der Recheneinrichtung 2 ausgeführt wird. Plantrajektorien 20 können dann insbesondere an eine Fahrzeugsteuerung 53 des Fahrzeugs 50 übermittelt werden und können dann von der Fahrzeugsteuerung 53 durch Ansteuern einer Längs- und einer Querführung des Fahrzeugs 50 umgesetzt werden.

Zum Erzeugen der Plantrajektorie 20 und der Wunschtrajektorie 21 erzeugt die Datenverarbeitungseinrichtung 2 vorerst eine mit Plantrajektorien 30 und Wunschtrajektorien 31 anderer Fahrzeuge kollisionsfreie kostengünstigste erste Trajektorie 6-1.

Ferner ist die Datenverarbeitungseinrichtung 2 dazu eingerichtet, hierzu eine kostengünstigste zweite Trajektorie 6-2, welche Plantrajektorien 30 und Wunschtrajektorien 31 anderer Fahrzeuge 55 ignoriert, zu erzeugen und die zweite Trajektorie 6-2 als jeweilige Wunschtrajektorie 21 an andere Fahrzeuge 55 nur zu übermitteln, wenn eine Kostendifferenz zwischen Kosten einer Realisierung der ersten Trajektorie 6-1 und Kosten einer Realisierung der zweiten Trajektorie 6-2 des Fahrzeugs 50 größer ist als ein vorgegebener Minimalkostenreduktionswert MinCR.

Sind $C_{6-1}$ die Kosten einer Realisierung der ersten Trajektorie 6-1 und $C_{6-2}$ die Kosten einer Realisierung der zweiten Trajektorie 6-2, so überprüft die Datenverarbeitungseinrichtung 2 insbesondere, ob

$$(C_{6-1} - C_{6-2}) > MinCR$$

erfüllt ist.

Die Datenverarbeitungseinrichtung 2 ist ferner dazu eingerichtet, hierzu zusätzlich oder alternativ eine kostengünstigste dritte Trajektorie 6-3 zu erzeugen, die mit Plantrajektorien 30 anderer Fahrzeuge 55 kollisionsfrei ist, jedoch Wunschtrajektorien 31 anderer Fahrzeuge 55 ignoriert. Die Datenverarbeitungseinrichtung 2 ist dazu eingerichtet, eine Wunschtrajektorie 31 eines anderen Fahrzeugs 55 bei der Trajektorienplanung zu akzeptieren, wenn eine Kostendifferenz zwischen der ersten Trajektorie 6-1 und der dritten Trajektorie 6-3 kleiner ist als ein vorgegebener Maximalkostenanstiegswert MaxCI. Im Falle einer akzeptierten Wunschtrajektorie 31 eines anderen Fahrzeugs 55 wird die erste Trajektorie 6-1 als neue Plantrajektorie 20 verwendet. Im Falle einer abgelehnten Wunschtrajektorie 31 des anderen Fahrzeugs 55 wird hingegen die dritte Trajektorie 6-3 als neue Plantrajektorie 20 verwendet.

Sind $C_{6-1}$ die Kosten der ersten Trajektorie 6-1 und $C_{6-2}$ die Kosten der zweiten Trajektorie 6-2, so überprüft die Datenverarbeitungseinrichtung 2 insbesondere, ob

$$(C_{6-1} - C_{6-3}) < MaxCI$$

erfüllt ist.

Es kann vorgesehen sein, dass die zweite Trajektorie 6-2 und/oder die dritte Trajektorie 6-3 für einen Planungszyklus nur gespeichert werden, wenn diese sich von der ersten Trajektorie 6-1 unterscheiden.

Es kann vorgesehen sein, dass der Minimalkostenreduktionswert MinCR und/oder der Maximalkostenanstiegswert MaxCI unter Berücksichtigung einer aktuellen Situation festgelegt werden. Hierzu werden beispielsweise die erfassten Umfelddaten 10 mittels der Datenverarbeitungseinrichtung 2 ausgewertet. In Abhängigkeit eines Auswertungsergebnisses werden dann der Minimalkostenreduktionswert MinCR und/oder der Maximalkostenanstiegswert MaxCI festgelegt und/oder aus einer vorgegebenen Liste ausgewählt. Beispiele für Situationen sind unterschiedliche Verkehrsdichten und/oder verschiedene Verkehrsszenarios (Stadt, Land, Autobahn, Kreuzung, Autobahnauffahrt etc.).

Es kann vorgesehen sein, dass der Minimalkostenreduktionswert MinCR und der Maximalkostenanstiegswert MaxCR abhängig voneinander festgelegt werden.

Es kann vorgesehen sein, dass der Minimalkostenreduktionswert MinCR und/oder der Maximalkostenanstiegswert MaxCR von mindestens einer Infrastruktureinrichtung 40 bereitgestellt werden. Die Infrastruktureinrichtung 40 übermittelt die Werte MinCR, MaxCR insbesondere über die Car-to-X-Schnittstelle 52 an das Fahrzeug 50 bzw. die Fahrzeuge 50, 55. Das Übermitteln kann hierbei örtlich begrenzt werden, sodass verschiedene Werte für verschiedene Orte oder Regionen vorgesehen sein können.

Es kann vorgesehen sein, dass der Minimalkostenreduktionswert MinCR und/oder der Maximalkostenanstiegswert MaxCR unter Berücksichtigung einer Fahrerpräferenz festgelegt werden.

Es kann vorgesehen sein, dass der Minimalkostenreduktionswert MinCR und/oder der Maximalkostenanstiegswert MaxCR unter Berücksichtigung von Fahrzeugeigenschaften und/oder einer Fahrzeugart festgelegt werden.

Es kann vorgesehen sein, dass die Kostendifferenz zwischen der ersten Trajektorie 6-1 und der zweiten Trajektorie 6-2 ebenfalls an jeweils andere Fahrzeuge 55 übermittelt wird, wenn die zweite Trajektorie 6-2 als Wunschtrajektorie 21 übermittelt wird, wobei die übermittelte Kostendifferenz von den anderen Fahrzeugen 55 bei der jeweiligen Trajektorienplanung berücksichtigt wird.

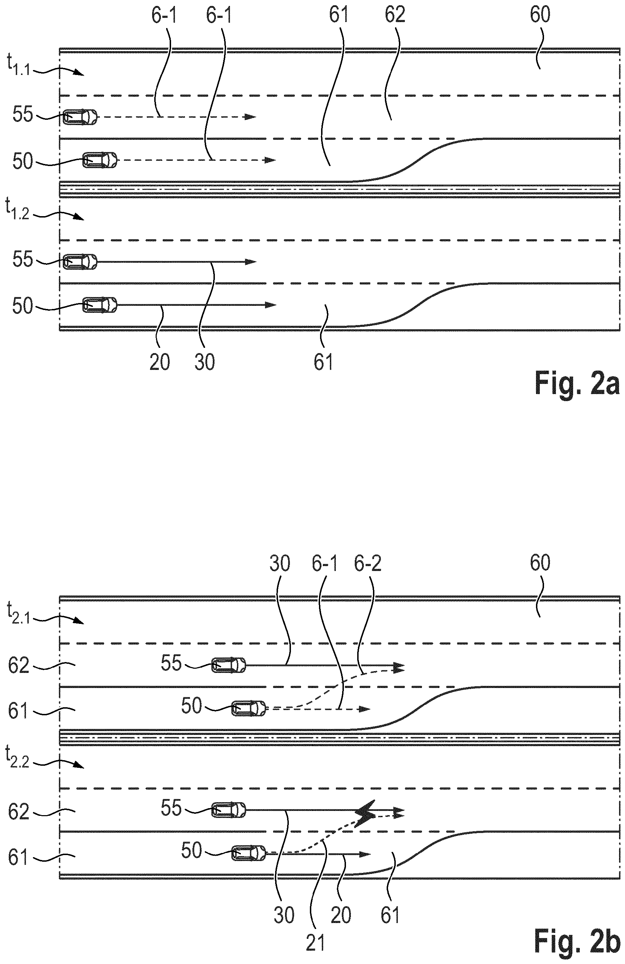

Die Figuren 2a und 2b zeigen schematische Darstellungen einer Verkehrssituation in aufeinanderfolgenden Planungszyklen $t_1$, $t_2$ zur Verdeutlichung einer Ausführungsform des Verfahrens. Die Ausführungsform korrespondiert hierbei mit der Alternative i). Dargestellt ist ein Einfädelvorgang auf einer Autobahn 60. Die Fig. 2a zeigt hierbei die Sicht der Trajektorienplaner von beiden Fahrzeugen 50, 55. Die Fig. 2b zeigt die Sicht des Trajektorienplaners des Fahrzeugs 50.

Das Fahrzeug 50 muss sich über eine Autobahnauffahrt 61 der Autobahn 60 auf eine rechte Fahrspur 62 der Autobahn 60 in einen Verkehrsfluss einfädeln. Hierbei befindet sich ein anderes Fahrzeug 55 auf der rechten Fahrspur 62.

In einer nicht kooperativen Situation, wenn also eine Wunschtrajektorie 20, 30 (Fig. 1) oder eine Plantrajektorie 21, 31 nicht mit einer Plantrajektorie 20, 30 oder Wunschtrajektorie 21, 31 des jeweils anderen Fahrzeugs 50, 55 kollidieren, wird von einem jeweiligen Trajektorienplaner der Fahrzeuge 50, 55 nur die erste Trajektorie 6-1 gespeichert, da die anderen möglichen zweiten Trajektorien 6-2 sich nicht von der ersten Trajektorie 6-1 unterscheiden (dargestellt in $t_{1.1}$). Eine durchgezogene Linie hindert das einfädelnde Fahrzeug 50 zum Zeitpunkt $t_1$ daran, eine auf die Autobahn 60 auffahrende Trajektorie zu berechnen. Entsprechend existieren sowohl für das Fahrzeug 50 als auch das andere Fahrzeug 55, welches sich auf der Autobahn 60 befindet, zum Zeitpunkt $t_1$ ausschließlich die ersten Trajektorien 6-1, sodass diese im Planungszyklus $t_1$ als Plantrajektorien 20, 30 verwendet werden (dargestellt in $t_{1.2}$).

In einem späteren Planungszyklus $t_2$ (dargestellt in Fig. 2b) befindet das Fahrzeug 50 an einer Position, an der ein Einfädeln entsprechend der Straßenverkehrsordnung erlaubt ist. Dennoch wählt das Fahrzeug 50 in dieser Situation als kostengünstigste erste Trajektorie 6-1 ein Abbremsen auf dem Autobahnauffahrt 61 aus, da alle anderen fahrbaren Trajektorien mit der Plantrajektorie 30 vom anderen Fahrzeug 55 kollidieren (vgl. Fig. 2b bei $t_{2.1}$). Zusätzlich erzeugt und speichert das Fahrzeug 50 eine zweite Trajektorie 6-2, welche nicht kollisionsfrei mit der Plantrajektorie 30 des anderen Fahrzeuges 55 (und gegebenenfalls weiterer anderer Fahrzeuge) sein muss. Im dargestellten Beispiel stellt diese einen Einfädelvorgang auf die rechte Fahrspur 62 dar, da das Einfädeln zu diesem Zeitpunkt entsprechend der im Trajektorienplaner hinterlegten Kostenfunktion als kostengünstiger als ein Abbremsen auf der Autobahnauffahrt 61 bewertet wird. Damit diese zweite Trajektorie 6-2 in naher Zukunft abgefahren werden kann, ist jedoch eine erfolgreiche Kooperation mit all jenen Verkehrsteilnehmern nötig, deren Plantrajektorien 30 mit dieser zweiten Trajektorie 6-2 in Konflikt steht, vorliegend also die Plantrajektorie 30 des anderen Fahrzeugs 55. Hierzu kann die zweite Trajektorie 6-2 in Form einer Wunschtrajektorie 21 als MCM-Nachricht an andere Verkehrsteilnehmer, im Beispiel also an das andere Fahrzeug 55, übermittelt werden. Um ein zu häufiges Senden von Kooperationswünschen und somit ein ineffizientes Kooperationsverhalten zu verhindern, erfolgt an dieser Stelle eine Evaluation der zweiten Trajektorie 6-2 anhand des Minimalkostenreduktionswerts MinCR, der ein Mindestmaß an Kostenreduktion festlegt, das erfüllt sein muss, bevor die zweite Trajektorie 6-2 als Wunschtrajektorie 21 des Fahrzeugs 50 übermittelt wird.

Im dargestellten Beispiel wird angenommen, dass die Kosten der zweiten Trajektorie 6-2 die Kosten der ersten Trajektorie 6-1 mindestens um die Höhe des Minimalkostenreduktionswerts MinCR unterschreiten, eine Kostendifferenz also größer ist als der Minimalkostenreduktionswert MinCR, sodass das Fahrzeug 50 in diesem Planungszyklus $t_2$ die zweite Trajektorie 6-2 als Wunschtrajektorie 21 mittels einer MCM-Nachricht übermittelt (dargestellt in $t_{2.2}$). Als Plantrajektorie 20 verwendet das Fahrzeug 50 in diesem Planungszyklus $t_2$ die kollisionsfreie erste Trajektorie 6-1. Dieses kontinuierliche, iterative Evaluieren von als Plantrajektorien 20 in Frage kommenden Trajektorien 6-1, 6-2 ermöglicht dem Trajektorienplaner, zu jeder Zeit auf sich verändernde Rahmenbedingungen zu reagieren.

Ist eine Kostendifferenz zwischen den Kosten der ersten Trajektorie 6-1 und den Kosten der zweiten Trajektorie 6-2 hingegen kleiner als der Minimalkostenreduktionswert MinCR, so wird die zweite Trajektorie 6-2 nicht als Wunschtrajektorie 21 an das andere Fahrzeug 55 übermittelt. Hierdurch kann eine unnötige Datenübertragung vermieden werden.

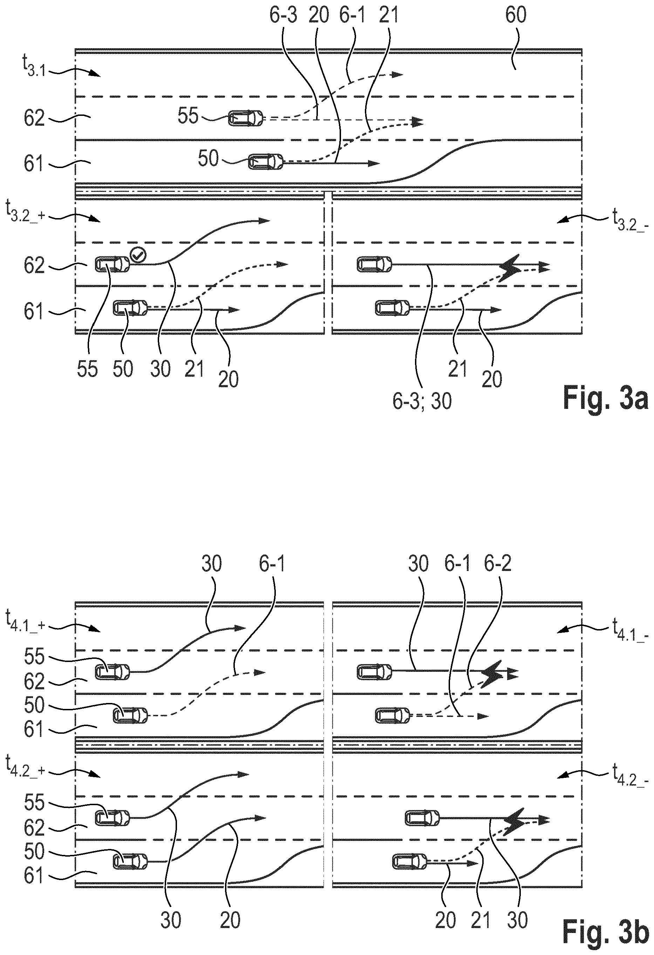

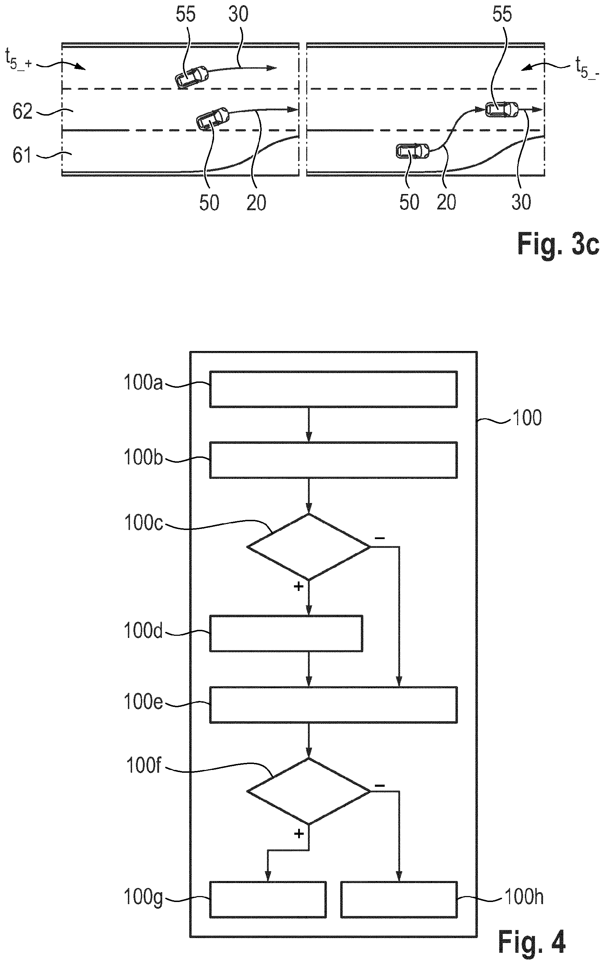

Die Figuren 3a bis 3c zeigen schematische Darstellungen derselben Verkehrssituation in nachfolgenden Planungszyklen zur Verdeutlichung einer Ausführungsform des Verfahrens. Die beschriebene Ausführungsform korrespondiert hierbei mit der zusätzlich oder alternativ ausgeführten Alternative ii). Dargestellt ist weiterhin der Einfädelvorgang auf der Autobahn 60. Die Fig. 3a zeigt hierbei eine Sicht des Trajektorienplaners des anderen Fahrzeugs 55. Die Fig. 3b zeigt eine Sicht des Trajektorienplaners des Fahrzeugs 50. Die Fig. 3c zeigt eine Sicht der Trajektorienplaner beider Fahrzeuge 50, 55.

Die Situation ist die gleiche wie die in den Figuren 2a und 2b gezeigte, jedoch zu späteren Planungszeitpunkten $t_3$, $t_4$, $t_5$.

Hierbei sendet das Fahrzeug 50 auf der Autobahnauffahrt 61, wie voranstehend beschrieben, eine Wunschtrajektorie 21 als MCM-Nachricht an das andere Fahrzeug 55, um auf die rechte Fahrspur 61 der Autobahn 60 auffahren zu können, ohne hierzu soweit abbremsen zu müssen, um erst hinter dem anderen Fahrzeug 55 auf die rechte Fahrspur 61 aufzufahren. Parallel hierzu wird zu jedem Planungszyklus $t_x$ auch stets die Plantrajektorie 20 in einer solchen, insbesondere in derselben, MCM-Nachricht übermittelt.

Sobald der Trajektorienplaner des anderen Fahrzeugs 55 die Wunschtrajektorie 21 des (kooperativen) Fahrzeugs 50 in Form einer MCM-Nachricht erhält, muss der Trajektorienplaner abwägen, ob die Wunschtrajektorie 21 akzeptiert werden soll und in die eigene Trajektorienplanung integriert werden soll. Dies ist beispielhaft in der Fig. 3a verdeutlicht. Da die erste Trajektorie 6-1 des anderen Fahrzeugs 55 kollisionsfrei mit der Wunschtrajektorie 21 des Fahrzeugs 50 sein muss, umfasst diese einen Spurwechsel auf eine linke Fahrspur 63 der Autobahn 60. In diesem Fall ergibt sich eine (für das andere Fahrzeug 55) kostengünstigere dritte Trajektorie 6-3, welche Kollisionen mit der Wunschtrajektorie 21 des Fahrzeugs 50 (und gegebenenfalls vorhandener weiterer Fahrzeuge) ignoriert und somit keinen Spurwechsel vornimmt. In einer solchen Situation stellt sich für den Trajektorienplaner des anderen Fahrzeugs 55 die Frage nach einer noch akzeptablen Kostenerhöhung, bis zu der die erhaltene Wunschtrajektorie 21 des Fahrzeugs 50 akzeptiert und berücksichtigt werden kann.

Hierzu wird die erste Trajektorie 6-1 des anderen Fahrzeugs 55 mit der dritten Trajektorie 6-3 des anderen Fahrzeugs 55 verglichen. Um ein zu häufiges Akzeptieren von Kooperationswünschen in Form von erhaltenen Wunschtrajektorien 21 und ein im Gesamtsystem betrachtetes ineffizientes, kooperatives Verhalten zu verhindern, muss eine Kostendifferenz zwischen der ersten Trajektorie 6-1 des anderen Fahrzeugs 55 und der dritten Trajektorie 6-3 des anderen Fahrzeugs 55 kleiner als ein vorgegebener Maximalkostenanstiegswert MaxCI sein. Die Fig. 3a zeigt zwei mögliche Ergebnisse des Vergleichs (dargestellt in $t_{3.2}$). Im Falle einer positiven Entscheidung ($t_{3.2\_}+$), das heißt, wenn die Kostendifferenz kleiner als der vorgegebene Maximalkostenanstiegswert MaxCI ist, verwendet das andere Fahrzeug 55 die erste Trajektorie 6-1 als neue Plantrajektorie 30. Falls die Kostendifferenz den Wert von MaxCI überschreitet, verwendet das andere Fahrzeug 50 hingegen die dritte Trajektorie 6-3 als neue Plantrajektorie 30, sodass die Wunschtrajektorie 21 des Fahrzeugs 50 weiterhin in Konflikt mit der (neuen) Plantrajektorie 30 des anderen Fahrzeugs 55 steht.

Die Fig. 3b zeigt die Sicht des Trajektorienplaners des Fahrzeug 50 in einem nachfolgenden Planungszyklus. Im Falle einer akzeptierten Kooperation in $t_3$ (Fig. 3a), stellt die Plantrajektorie 30 des anderen Fahrzeugs 55 keinen Konflikt mehr mit der Wunschtrajektorie 21 des Fahrzeugs 50, das heißt, mit dem angefragten Spurwechsel, dar, sodass die (für diesen Planungszyklus erzeugte) erste Trajektorie 6-1 des Fahrzeugs 50 einen Einfädelvorgang auf die rechte Fahrspur 62 umfasst ($t_{4.1\_}+$). Die erste Trajektorie 6-1 kann somit vom Fahrzeug 50 als neue Plantrajektorie 20 verwendet werden ($t_{4.2\_}+$).

Im Falle einer Ablehnung der Kooperation im Planungszyklus $t_3$ (Fig. 3a), stellt die (für diesen Planungszyklus erzeugte) erste Trajektorie 6-1 des Fahrzeugs 50 hingegen auch im Planungszyklus $t_4$ ein Abbremsen auf der Autobahnauffahrt 61 dar ($t_{4.1\_}-$). Analog zum Zeitpunkt $t_3$ würde insbesondere auch eine kostengünstigere zweite Trajektorie 6-2 gespeichert werden, welche die Kollision mit der Plantrajektorie 30 des anderen Fahrzeugs 55 ignoriert.

Wenn auch in diesem Planungszyklus $t_4$ die Kosten der zweiten Trajektorie 6-2 des Fahrzeugs 50 die Kosten der ersten Trajektorie 6-1 des Fahrzeugs 50 mindestens um den vorgegebenen Minimalkostenreduktionswert MinCR unterschreiten, übermittelt das Fahrzeug 50 wieder eine Wunschtrajektorie 21 als MCM-Nachricht. Als Plantrajektorie 20 wird die erste Trajektorie 6-1 verwendet, sodass das Fahrzeug 50 auf der Autobahnauffahrt 61 abbremsen würde ($t_{4.2\_}-$). In einem nachfolgenden Planungszyklus würde das andere Fahrzeug 55 erneut die eingehende Wunschtrajektorie 21 des Fahrzeugs 50 bei der Auswahl der Plantrajektorie 30 entsprechend dem voranstehend beschriebenen Vorgehen berücksichtigen.

In der Fig. 3c ist abschließend ein möglicher Ausgang eines Einfädelvorgangs im Falle einer Kooperation ($t_{5\_}+$) oder einer fortdauernden Ablehnung ($t_{5\_}-$) der Kooperationsanfragen durch das andere Fahrzeug 55 aus Sicht beider Trajektorienplaner dargestellt. Im Falle der Kooperation ($t_{5\_}+$) wechselt das andere Fahrzeug 55 auf die linke Fahrspur 63, gibt hierdurch die rechte Fahrspur 62 frei, und das Fahrzeug 50 kann von der Autobahnauffahrt 61 auf die rechte Fahrspur 62 wechseln. Im Falle der fortdauernden Ablehnung ($t_{5\_}-$) muss das Fahrzeug 50 auf der Autobahnauffahrt 61 abbremsen und kann erst hinter dem anderen Fahrzeug 55 auf die rechte Fahrspur 62 wechseln.

In der Fig. 4 ist ein schematisches Ablaufdiagramm einer Ausführungsform des Verfahrens zur kooperativen Manöverplanung für mindestens zwei Fahrzeuge gezeigt.

In einer Maßnahme 100 werden in jedem Fahrzeug mittels eines Trajektorienplaners für jeden Planungszyklus aus einer Vielzahl von umfeldabhängig erzeugten fahrbaren Trajektorien in Abhängigkeit von einer Kostenfunktion eine Plantrajektorie und eine Wunschtrajektorie ausgewählt und jeweils an andere Fahrzeuge im Umfeld übermittelt.

In einer Maßnahme 100a wird hierzu eine mit Plantrajektorien und Wunschtrajektorien anderer Fahrzeuge kostengünstigste kollisionsfreie erste Trajektorie erzeugt.

In einer Maßnahme 100b wird eine kostengünstigste zweite Trajektorie erzeugt, welche Plantrajektorien und Wunschtrajektorien anderer Fahrzeuge ignoriert.

In einer Maßnahme 100c wird überprüft, ob eine Kostendifferenz zwischen der ersten Trajektorie und der zweiten Trajektorie des jeweiligen Fahrzeugs größer ist als ein vorgegebener Minimalkostenreduktionswert. Ist dies der Fall, wird in einer Maßnahme 100d die zweite Trajektorie als jeweilige Wunschtrajektorie an andere Fahrzeuge übermittelt.

Anderenfalls wird keine Wunschtrajektorie an andere Fahrzeuge übermittelt und es wird mit der Maßnahme 100e fortgefahren.

In der Maßnahme 100e wird eine kostengünstigste dritte Trajektorie erzeugt, die mit Plantrajektorien anderer Fahrzeuge kollisionsfrei ist, jedoch Wunschtrajektorien anderer Fahrzeuge ignoriert.

In einer Maßnahme 100f wird überprüft, ob eine Kostendifferenz zwischen der ersten Trajektorie und der dritten Trajektorie kleiner ist als ein vorgegebener Maximalkostenanstiegswert. Ist dies der Fall (d.h. die Wunschtrajektorie des anderen Fahrzeugs wird akzeptiert), so wird in einer Maßnahme 100g die erste Trajektorie als neue Plantrajektorie verwendet. Ist dies hingegen nicht der Fall (abgelehnte Wunschtrajektorie), so wird in einer Maßnahme 100h die dritte Trajektorie als neue Plantrajektorie verwendet.

Die Maßnahmen 100e bis 100h können alternativ oder zusätzlich zu den Maßnahmen 100a bis 100d ausgeführt werden. Es ist insbesondere vorgesehen, dass die Maßnahmen 100a bis 100d und die Maßnahmen 100e bis 100h parallel zueinander ausgeführt werden.

Weitere Ausführungsformen des Verfahrens wurden voranstehend bereits beschrieben.

Ein Vorteil des Verfahrens und der Assistenzvorrichtung ist, dass ein Datenvolumen reduziert werden kann. Ferner kann eine Kooperation zwischen Fahrzeugen indirekt erfolgen, indem jedes Fahrzeugs selbst eine Plantrajektorie und maximal eine Wunschtrajektorie an andere Fahrzeuge im Umfeld übermittelt. Eine direkte Bestätigung, dass eine Wunschtrajektorie eines anderen Fahrzeugs bei der Trajektorienplanung berücksichtigt wird, erfolgt nicht. Hingegen erfolgt eine indirekte Bestätigung, indem die Plantrajektorie (die dann an andere Fahrzeuge übermittelt wird) entsprechend geändert wird. Hierdurch kann eine stabile kooperative Manöverplanung von mindestens zwei Fahrzeugen erreicht werden.

**Bezugszeichenliste**

| | |
|---|---|
| 1 | Assistenzvorrichtung |
| 2 | Datenverarbeitungseinrichtung |
| 2-1 | Recheneinrichtung |
| 2-2 | Speicher |
| 3 | Trajektorienplaner |
| 6-1 | erste Trajektorie |
| 6-2 | zweite Trajektorie |
| 6-3 | dritte Trajektorie |
| 10 | Sensordaten |
| 20 | Plantrajektorie (Fahrzeug) |
| 21 | Wunschtrajektorie (Fahrzeug) |
| 30 | Plantrajektorie (anderes Fahrzeug) |
| 31 | Wunschtrajektorie (anderes Fahrzeug) |
| 40 | Infrastruktureinrichtung |
| 50 | Fahrzeug |
| 51 | Umfeldsensor |
| 52 | Car-to-X-Schnittstelle |
| 53 | Fahrzeugsteuerung |
| 60 | Autobahn |
| 61 | Autobahnauffahrt |
| 62 | rechte Fahrspur |
| 63 | linke Fahrspur |
| 100, 100a-h | Maßnahmen des Verfahrens |
| $t_x$ | Planungszyklus |

**Patentansprüche**

1. Verfahren zur kooperativen Manöverplanung für mindestens zwei Fahrzeuge (50,55), wobei in jedem Fahrzeug (50,55) mittels eines Trajektorienplaners (3) für jeden Planungszyklus ($t_x$) aus einer Vielzahl von umfeldabhängig erzeugten fahrbaren Trajektorien in Abhängigkeit von einer Kostenfunktion eine Plantrajektorie (20,30) und eine Wunschtrajektorie (21,31) ausgewählt werden und jeweils an andere Fahrzeuge (55) im Umfeld übermittelt werden; wobei hierzu eine mit Plantrajektorien (30) und Wunschtrajektorien (31) anderer Fahrzeuge (55) kollisionsfreie kostengünstigste erste Trajektorie (6-1) erzeugt wird, und

i) wobei hierzu eine kostengünstigste zweite Trajektorie (6-2), welche Plantrajektorien (30) und Wunschtrajektorien (31) anderer Fahrzeuge (55) ignoriert, erzeugt wird, wobei die zweite Trajektorie (6-2) als Wunschtrajektorie (21) an andere Fahrzeuge (55) nur übermittelt wird, wenn eine Kostendifferenz zwischen der ersten Trajektorie (6-1) und der zweiten Trajektorie (6-2) des jeweiligen Fahrzeugs (50) größer ist als ein vorgegebener Minimalkostenreduktionswert (MinCR), und
ii) wobei hierzu zusätzlich oder alternativ zu i) eine kostengünstigste dritte Trajektorie (6-3) erzeugt wird, die mit Plantrajektorien (30) anderer Fahrzeuge (55) kollisionsfrei ist, jedoch Wunschtrajektorien (31) anderer Fahrzeuge (55) ignoriert, wobei eine Wunschtrajektorie (31) eines anderen Fahrzeugs (55) von einem Fahrzeug (50) bei der Trajektorienplanung akzeptiert wird, wenn eine Kostendifferenz zwischen der ersten Trajektorie (6-1) und der dritten Trajektorie (6-3) kleiner ist als ein vorgegebener Maximalkostenanstiegswert (MaxCI), wobei das Fahrzeug (50) im Falle einer akzeptierten Wunschtrajektorie (31) eines anderen Fahrzeugs (50) die erste Trajektorie (6-1) als neue Plantrajektorie (20) verwendet und wobei das Fahrzeug (50) im Falle einer abgelehnten Wunschtrajektorie (31) des anderen Fahrzeugs (55) die dritte Trajektorie (6-3) als neue Plantrajektorie (20) verwendet.

2. Verfahren nach Anspruch 1, **dadurch gekennzeichnet, dass** die zweite Trajektorie (6-2) und/oder die dritte Trajektorie (6-3) für einen Planungszyklus nur gespeichert werden, wenn diese sich von der ersten Trajektorie (6-1) unterscheiden.

3. Verfahren nach Anspruch 1 oder 2, **dadurch gekennzeichnet, dass** der Minimalkostenreduktionswert (MinCR) und/oder der Maximalkostenanstiegswert (MaxCI) unter Berücksichtigung einer aktuellen Situation festgelegt werden.

4. Verfahren nach einem der vorangegangenen Ansprüche, **dadurch gekennzeichnet, dass** der Minimalkostenreduktionswert (MinCR) und der Maximalkostenanstiegswert (MaxCI) abhängig voneinander festgelegt werden.

5. Verfahren nach einem der vorangegangenen Ansprüche, **dadurch gekennzeichnet, dass** der Minimalkostenreduktionswert (MinCR) und/oder der Maximalkostenanstiegswert (MaxCI) von mindestens einer Infrastruktureinrichtung (40) bereitgestellt werden.

6. Verfahren nach einem der vorangegangenen Ansprüche, **dadurch gekennzeichnet, dass** der Minimalkostenreduktionswert (MinCR) und/oder der Maximalkostenanstiegswert (MaxCI) unter Berücksichtigung einer Fahrerpräferenz festgelegt werden.

7. Verfahren nach einem der vorangegangenen Ansprüche, **dadurch gekennzeichnet, dass** der Minimalkostenreduktionswert (MinCR) und/oder der Maximalkostenanstiegswert (MaxCI) unter Berücksichtigung von Fahrzeugeigenschaften und/oder einer Fahrzeugart festgelegt werden.

8. Verfahren nach einem der vorangegangenen Ansprüche, **dadurch gekennzeichnet, dass** die Kostendifferenz zwischen der ersten Trajektorie (6-1) und der zweiten Trajektorie (6-2) ebenfalls an jeweils andere Fahrzeuge (55) übermittelt wird, wenn die zweite Trajektorie (6-2) als Wunschtrajektorie (21) übermittelt wird, wobei die übermittelte Kostendifferenz von den anderen Fahrzeugen (55) bei der jeweiligen Trajektorienplanung berücksichtigt wird.

9. Assistenzvorrichtung (1) für ein Fahrzeug (50), umfassend:

eine Datenverarbeitungseinrichtung (2),
wobei die Datenverarbeitungseinrichtung (2) dazu eingerichtet ist, in dem Fahrzeug (50) mittels eines Trajektorienplaners (3) für jeden Planungszyklus ($t_x$) aus einer Vielzahl von umfeldabhängig erzeugten fahrbaren Trajektorien in Abhängigkeit von einer Kostenfunktion eine Plantrajektorie (20) und eine Wunschtrajektorie (21) auszuwählen und jeweils an andere Fahrzeuge (55) im Umfeld zu übermitteln; und
hierzu eine mit Plantrajektorien (30) und Wunschtrajektorien (31) anderer Fahrzeuge (55) kollisionsfreie kostengünstigste erste Trajektorie (6-1) zu erzeugen, und

i) hierzu eine kostengünstigste zweite Trajektorie (6-2), welche Plantrajektorien (30) und Wunschtrajektorien (31) anderer Fahrzeuge (55) ignoriert, zu erzeugen und die zweite Trajektorie (6-2) als Wunschtrajektorie (21) an andere Fahrzeuge (55) nur zu übermitteln, wenn eine Kostendifferenz zwischen der ersten Trajektorie (6-1) und der zweiten Trajektorie (6-2) des jeweiligen Fahrzeugs (50) größer ist als ein vorgegebener Minimalkostenreduktionswert (MinCR), und

ii) hierzu zusätzlich oder alternativ zu i) eine kostengünstigste dritte Trajektorie (6-3) zu erzeugen, die mit Plantrajektorien (30) anderer Fahrzeuge (55) kollisionsfrei ist, jedoch Wunschtrajektorien (31) anderer Fahrzeuge (55) ignoriert, und eine Wunschtrajektorie (31) eines anderen Fahrzeugs (55) bei der Trajektorienplanung zu akzeptieren, wenn eine Kostendifferenz zwischen der ersten Trajektorie (6-1) und der dritten Trajektorie (6-3) kleiner ist als ein vorgegebener Maximalkostenanstiegswert (MaxCI), und im Falle einer akzeptierten Wunschtrajektorie (31) eines anderen Fahrzeugs (55) die erste Trajektorie (6-1) als neue Plantrajektorie (20) zu verwenden und im Falle einer abgelehnten Wunschtrajektorie (31) eines anderen Fahrzeugs (55) die dritte Trajektorie (6-3) als neue Plantrajektorie (20) zu verwenden.

10. Fahrzeug (50,55), umfassend eine Assistenzvorrichtung (1) nach Anspruch 9.

**Fig. 1**

Fig. 2a

Fig. 2b

Fig. 3a

Fig. 3b

Fig. 3c

Fig. 4

**Europäisches Patentamt**
**European Patent Office**
**Office européen des brevets**

# EUROPÄISCHER RECHERCHENBERICHT

**Nummer der Anmeldung**

**EP 22 20 7982**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 002675 A1 (PSA AUTOMOBILES SA [FR]) 10. Oktober 2019 (2019-10-10) | 1,2,9,10 | INV. G08G1/0967 B60W30/09 B60W30/095 B60W60/00 G08G1/16 |
| A | * Absatz [0007] - Absatz [0015]; Abbildungen 1a-1d * <br> * Absatz [0055] - Absatz [0059] * <br>----- | 3-8 | |
| X | DE 10 2019 216913 A1 (BOSCH GMBH ROBERT [DE]) 6. Mai 2021 (2021-05-06) | 1,2,9,10 | |
| A | * Absatz [0008] - Absatz [0057]; Abbildungen * <br> * Absatz [0070] * <br>----- | 3-8 | |
| A | US 2018/321689 A1 (LEHMANN BERND [DE] ET AL) 8. November 2018 (2018-11-08) <br> * das ganze Dokument * <br>----- | 1-10 | |
| A | DE 10 2019 208291 A1 (PSA AUTOMOBILES SA [FR]) 24. Dezember 2020 (2020-12-24) <br> * Absatz [0009] - Absatz [0018] * <br>----- | 1-10 | |

**RECHERCHIERTE SACHGEBIETE (IPC)**

G08G
B60W

Der vorliegende Recherchenbericht wurde für alle Patentansprüche erstellt

| Recherchenort | Abschlußdatum der Recherche | Prüfer |
|---|---|---|
| Den Haag | 20. April 2023 | Malagoli, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

# EP 4 198 942 A1

## ANHANG ZUM EUROPÄISCHEN RECHERCHENBERICHT
## ÜBER DIE EUROPÄISCHE PATENTANMELDUNG NR.

EP 22 20 7982

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-2023

| Im Recherchenbericht angeführtes Patentdokument | Datum der Veröffentlichung | Mitglied(er) der Patentfamilie | Datum der Veröffentlichung |
|---|---|---|---|
| DE 102018002675 A1 | 10-10-2019 | DE 102018002675 A1 | 10-10-2019 |
| | | EP 3776514 A1 | 17-02-2021 |
| | | WO 2019192909 A1 | 10-10-2019 |
| DE 102019216913 A1 | 06-05-2021 | CN 114631131 A | 14-06-2022 |
| | | DE 102019216913 A1 | 06-05-2021 |
| | | EP 4055579 A1 | 14-09-2022 |
| | | JP 2022554335 A | 28-12-2022 |
| | | KR 20220088791 A | 28-06-2022 |
| | | US 2022392341 A1 | 08-12-2022 |
| | | WO 2021089238 A1 | 14-05-2021 |
| US 2018321689 A1 | 08-11-2018 | CN 108351648 A | 31-07-2018 |
| | | DE 102015221817 A1 | 11-05-2017 |
| | | EP 3371669 A1 | 12-09-2018 |
| | | US 2018321689 A1 | 08-11-2018 |
| | | WO 2017076593 A1 | 11-05-2017 |
| DE 102019208291 A1 | 24-12-2020 | KEINE | |

EPO FORM P0461

Für nähere Einzelheiten zu diesem Anhang : siehe Amtsblatt des Europäischen Patentamts, Nr.12/82

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014211507 A1